# EUROPEAN PATENT SPECIFICATION

(11) **EP 3 185 494 B1**
(45) Date of publication and mention of the grant of the patent: **17.02.2021**
(21) Application number: 14881611.9
(22) Date of filing: 24.10.2014
(51) Int. Cl.: H04L 12/64, H04L 12/803, H04L 12/755, H04L 12/757

(54) **ROUTING LOAD SHARING METHOD AND APPARATUS**
VERFAHREN UND VORRICHTUNG ZUR TEILUNG VON ROUTINGLASTEN
PROCÉDÉ ET APPAREIL DE PARTAGE DE CHARGE DE ROUTAGE

(30) Priority: 18.08.2014 CN 201410407347
(43) Date of publication of application: 28.06.2017
(73) Proprietor: ZTE Corporation, Shenzhen, Guangdong 518057 (CN)
(72) Inventor: YANG, Shenghua, Shenzhen Guangdong 518057 (CN); YANG, Hongyan, Shenzhen Guangdong 518057 (CN); TANG, Haihua, Shenzhen Guangdong 518057 (CN)
(74) Representative: Mozzi, Matteo
(86) International application number: PCT/CN2014/089448
(87) International publication number: WO 2015/117408

(56) References cited:
- EP-A1- 2 624 632
- CN-A- 101 374 113
- CN-A- 101 980 487
- CN-A- 102 420 772

## Description

### Technical field

The present disclosure relates to the field of communications, and more particularly, to a routing load sharing method and apparatus.

### Background

In the field of computer data communication, routing load sharing is a strategy and method for performing load balancing on multiple links on network node equipment. The routing load sharing enables the network node equipment to allocate traffic to multiple paths, thus making full use of bandwidth resources. In related art, the forwarding architecture of the routing load sharing adopts the manner of looking up forwarding prefix at the uplink and looking up packaging information at the downlink. In a distributed system, the network node equipment usually adopts the mode in which multiple service processing boards perform processing. The traffic flows in from one processing board, and flows out from another processing board. The incoming processing board is referred to as the uplink, and the outgoing processing board is referred to as the downlink. When a new link of the routing load sharing runs cross the boards of the uplink and the downlink, uplink forwarding has been added to the chip, and therefore the traffic will be shared to this new link, but if the downlink packaging has not yet been sent to the chip due to the timing sequence, the traffic will eventually have a packet loss due to being unable to find the egress.

EP 2624632 A1 **discloses mobile node host route installation and withdrawal.**

### Summary

This application provides a technical solution to solve the problem of packet loss in the distributed system due to writing an uplink forwarding table to the chip prior to writing a downlink packaging table to the chip when the uplink forwarding prefix and the downlink packaging of the new link of the routing load sharing run cross the boards. The present invention is defined by the independent claims, to which reference should now be made. Specific embodiments are defined by the dependent claims.

In order to achieve the above object, the invention provides a method for synchronizing writing an uplink forwarding table and a downlink packaging table, comprising: pre-configuring a time period to wait previous to determining whether to postpone the writing of an uplink forwarding table; determining whether a downlink packaging table has been written when the pre-configured time period is elapsed; and directly writing (S300) the uplink forwarding table if the downlink packaging table has been written; wherein the uplink forwarding table and the downlink packaging table are located in one network node equipment.

In an exemplary embodiment, after determining whether the downlink packaging table has been written when the pre-configured time of writing the uplink forwarding table arrives, the method may further include:
setting delay time if the downlink packaging table has not been written, and writing the uplink forwarding table if the downlink packaging table has been written when the delay time expires.

In an exemplary embodiment, after determining whether the downlink packaging table has been written when the pre-configured time of writing the uplink forwarding table arrives, the method may further include:
resetting the delay time if the downlink packaging table has not been written when the delay time expires, and writing the uplink forwarding table after the writing of the downlink packaging table is completed.

In an exemplary embodiment, directly writing the uplink forwarding table if the downlink packaging table has been written may include:
instead of postponing the writing of the uplink forwarding table, directly writing the uplink forwarding table for all members if the downlink packaging table has been written.

In an exemplary embodiment, after determining whether the downlink packaging table has been written when the pre-configured time of writing the uplink forwarding table arrives, the method may further include:
if the downlink packaging table has not been written, instead of postponing the writing of the uplink forwarding table, directly writing the uplink forwarding table for a member corresponding to most approaching pre-configured time of writing the uplink forwarding table, and taking second most approaching pre-configured time of writing the uplink forwarding table as re-delayed time of writing the uplink forwarding table.

In order to achieve the above object, the invention provides an apparatus for synchronizing writing an uplink forwarding table and a downlink packaging table, comprising: a pre-configuring module arranged to pre-configure time period to wait previous to determining whether to postpone the writing of an uplink forwarding table; a determining module arranged to determine whether a downlink packaging table has been written when the pre-configured time period is elapsed; and an executing module arranged to directly write the uplink forwarding table if the downlink packaging table has been written; wherein the uplink forwarding table and the downlink packaging table are located in one network node equipment.

In an exemplary embodiment, the apparatus may further include:
a time delaying module arranged to set delay time if the downlink packaging table has not been written, and write the uplink forwarding table if the downlink packaging table has been written when the delay time expires.

In an exemplary embodiment, the time delaying module is further arranged to reset the delay time if the downlink packaging table has not been written when the delay time expires, and write the uplink forwarding table after the writing of the downlink packaging table is completed.

In an exemplary embodiment, the executing module is arranged to, instead of postponing the writing of the uplink forwarding table, directly write the uplink forwarding table for all members if the downlink packaging table has been written.

In an exemplary embodiment, the time delaying module is further arranged to: if the downlink packaging table has not been written, instead of postponing the writing of the uplink forwarding table, directly write the uplink forwarding table for a member corresponding to most approaching pre-configured time of writing the uplink forwarding table, and take second most approaching pre-configured time of writing the uplink forwarding table as re-delayed time of writing the uplink forwarding table.

According to the method provided by the invention of the present disclosure, time of writing an uplink forwarding table is pre-configured; it is determined whether a downlink packaging table has been written when the pre-configured time of writing the uplink forwarding table arrives; and the uplink forwarding table is directly written if the downlink packaging table has been written. The beneficial effect achievable by the invention of the present disclosure is that it can be ensured, by means of pre-configuring time of writing the uplink forwarding table, that the writing of a downlink packaging table is prior to the writing of an uplink forwarding table. In this way, the problem of packet loss during forwarding caused by inconsistent uplink and downlink synchronization of distributed devices can be solved, thereby ensuring the reliability of network transmission.

### Brief description of the drawings

Fig. 1 is a flow schematic diagram of a first embodiment of a routing load sharing method according to the present disclosure;
Fig. 2 is a flow schematic diagram of a second embodiment of a routing load sharing method according to the present disclosure;
Fig. 3 is a flow schematic diagram of a third embodiment of a routing load sharing method according to the present disclosure;
Fig. 4 is a flow schematic diagram of a fourth embodiment of a routing load sharing method according to the present disclosure; and
Fig. 5 is a schematic diagram of a functional module of a routing load sharing apparatus according to the present disclosure.

The implementation, functional features and advantages of the present disclosure will be further described in combination with the embodiments with reference to the accompanying drawings.

### Detailed description of the embodiments

It is to be understood that the specific embodiments described herein are for the purpose of explaining the present disclosure only and are not intended to be limiting of the present disclosure.

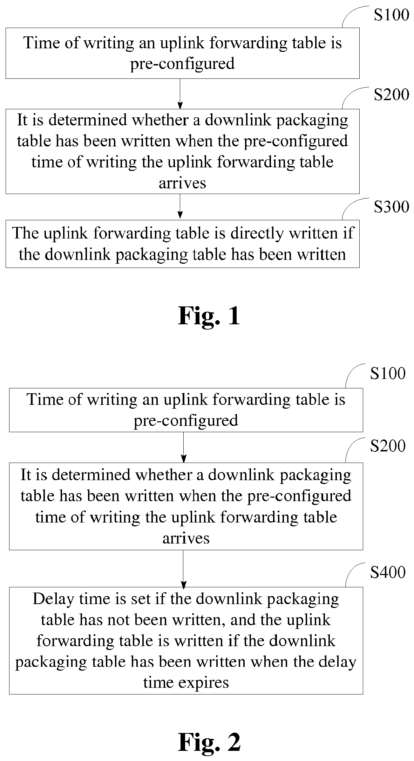

An embodiment of the present disclosure provides a routing load sharing method, referring to Fig. 1. Fig. 1 is a flow schematic diagram of a first embodiment of a routing load sharing method according to the present disclosure. In the first embodiment, the routing load sharing method includes the following steps.

Step S100: Time of writing an uplink forwarding table is pre-configured.

The routing load sharing apparatus first configures time of writing an uplink forwarding table of the routing load sharing. The pre-configured time of writing the uplink forwarding table is not an arbitrary time interval, but is preferably an empirical value obtained after multiple tests. The pre-configured time of writing the uplink forwarding table is important for protecting the reliability of data transmission and ensuring the timeliness of the response at the same time.

Step S200: It is determined whether a downlink packaging table has been written when the pre-configured time of writing the uplink forwarding table arrives.

When the pre-configured time of writing the uplink forwarding table arrives, the routing load sharing apparatus traverses all the members one by one to determine whether each member has written the downlink packaging table so as to determine whether it is necessary to postpone the writing of the uplink forwarding table. The purpose of the determination is to ensure that the uplink forwarding table is written prior to the writing of the downlink packaging table. The traffic will be led to the corresponding downlink after the uplink forwarding table is written.

Step S300: The uplink forwarding table is directly written if the downlink packaging table has been written.

The routing load sharing apparatus can conduct the corresponding processing based on the result of the determination. If the downlink packaging table has been written, it is indicative that the downlink packaging is completed, and the members do not need to postpone the writing of the uplink forwarding table, but directly write the uplink forwarding table. By virtue of the technical scheme, it can be ensured that the writing of the downlink packaging table is prior to the writing of the uplink forwarding table.

The routing load sharing method provided by the present embodiment solves the problem of packet loss during forwarding caused by inconsistent uplink and downlink synchronization of distributed devices, thereby ensuring the reliability of network transmission.

Referring further to Fig. 2, Fig. 2 is a flow schematic diagram of a second embodiment of a routing load sharing method. In the second embodiment, after Step S200, the method may further include the following step.

Step S400: Delay time is set if the downlink packaging table has not been written, and the uplink forwarding table is written if the downlink packaging table has been written when the delay time expires.

The routing load sharing apparatus conducts corresponding processing based on the result of the determination. For example, the routing load sharing apparatus sets the delay time if the downlink packaging table has not been written, and writes the uplink forwarding table if the downlink packaging table has been written when the delay time expires. The routing load sharing apparatus in the present embodiment ensures by means of the delay time that the writing of the downlink packaging table is prior to the writing of the uplink forwarding table, thereby solving the problem of packet loss during forwarding caused by inconsistent uplink and downlink synchronization of distributed devices, and ensuring the reliability of network transmission.

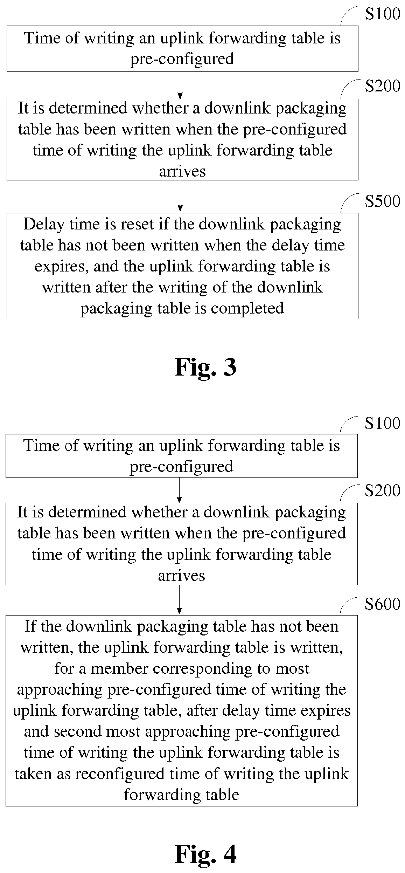

Referring further to Fig. 3, Fig. 3 is a flow schematic diagram of a third embodiment of a routing load sharing method. In the third embodiment, after Step S200, the method may further include the following step.

Step S500: Delay time is reset if the downlink packaging table has not been written when the delay time expires, and the uplink forwarding table is written after the writing of the downlink packaging table is completed.

The routing load sharing apparatus conducts corresponding processing based on the result of the determination. For example, the routing load sharing apparatus resets the delay time if the downlink packaging table has not been written when the delay time expires, and writes the uplink forwarding table after the writing of the downlink packaging table is completed. The delay time is not suggested to be set too long or too short, and should be subjected to appropriate adjustments, so as to protect the reliability of data transmission and at the same time ensure the timeliness of the response.

Referring further to Fig. 4, Fig. 4 is a flow schematic diagram of a fourth embodiment of a routing load sharing method. In the fourth embodiment, after Step S200, the method may further include the following step.

Step S600: If the downlink packaging table has not been written, a member corresponding to most approaching pre-configured time of writing the uplink forwarding table directly writes the uplink forwarding table instead of postponing the writing of the uplink forwarding table, and second most approaching pre-configured time of writing the uplink forwarding table is taken as re-delayed time of writing the uplink forwarding table. The real-time data transmission technology proposed by the present embodiment transmits data at regular intervals, and guarantees the reliability of the network transmission while guaranteeing the rate of transmission of the system.

The routing load sharing apparatus conducts corresponding processing based on the result of the determination. For example, if the downlink packaging table has not been written, the routing load sharing apparatus directly writes, for a member corresponding to the most approaching pre-configured time of writing the uplink forwarding table, the uplink forwarding tables without the delay time, and takes the second most approaching pre-configured time of writing the uplink forwarding table as re-delayed time of writing the uplink forwarding table, thus ensuring that the uplink forwarding table is written in a timely manner by means of the re-delayed time of writing the uplink forwarding table in the next routing load sharing.

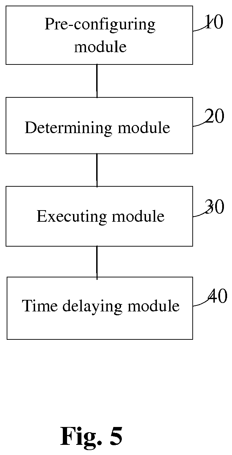

The present embodiment further provides a routing load sharing apparatus, as shown in Fig. 5. The routing load sharing apparatus includes:
a pre-configuring module 10 arranged to pre-configure time of writing an uplink forwarding table;
a determining module 20 arranged to determine whether a downlink packaging table has been written when the pre-configured time of writing the uplink forwarding table arrives; and
an executing module 30 arranged to directly write the uplink forwarding table if the downlink packaging table has been written.

The pre-configuring module 10 of the routing load sharing apparatus first configures time of writing an uplink forwarding table of the routing load sharing. The pre-configured time of writing the uplink forwarding table is not an arbitrary time interval, but is preferably an empirical value obtained after multiple tests. The pre-configured time of writing the uplink forwarding table is important for protecting the reliability of data transmission and ensuring the timeliness of the response at the same time.

When the pre-configured time of writing the uplink forwarding table arrives. the determining module 20 of the routing load sharing apparatus traverses all the members one by one to determine whether each member has written the downlink packaging table so as to determine whether it is necessary to postpone the writing of the uplink forwarding table. The purpose of the determination is to ensure that the uplink forwarding table is written prior to the writing of the downlink packaging table. The traffic will be led to the corresponding downlink after the uplink forwarding table is written.

The executing module 30 of the routing load sharing apparatus can conduct the corresponding processing based on the result of the determination. If the downlink packaging table has been written, it is indicative that the downlink packaging is completed, and the members do not need to postpone the writing of the uplink forwarding table, but directly write the uplink forwarding table. By virtue of the technical scheme, it can be ensured that the writing of the downlink packaging table is prior to the writing of the uplink forwarding table.

The beneficial effect achievable by the routing load sharing method provided by the present embodiment is that it can be ensured, by means of pre-configuring time of writing the uplink forwarding table, that the writing of a downlink packaging table is prior to the writing of an uplink forwarding table. In this way, the problem of packet loss during forwarding caused by inconsistent uplink and downlink synchronization of distributed devices can be solved, thereby ensuring the reliability of network transmission

Referring further to Fig. 5, the routing load sharing apparatus may further include:
a time delaying module 40 arranged to set delay time if the downlink packaging table has not been written, and write the uplink forwarding table if the downlink packaging table has been written when the delay time expires.

The time delaying module 40 of the routing load sharing apparatus conducts corresponding processing based on the result of the determination. For example, the time delaying module 40 sets the delay time if the downlink packaging table has not been written, and writes the uplink forwarding table if the downlink packaging table has been written when the delay time expires. The routing load sharing apparatus in the present embodiment ensures by means of the delay time that the writing of the downlink packaging table is prior to the writing of the uplink forwarding table, thereby solving the problem of packet loss during forwarding caused by inconsistent uplink and downlink synchronization of distributed devices, and ensuring the reliability of network transmission.

The time delaying module 40 is further arranged to reset the delay time if the downlink packaging table has not been written when the delay time expires, and write the uplink forwarding table after the downlink packaging table is completed.

The time delaying module 40 of the routing load sharing apparatus is further arranged to reset the delay time if the downlink packaging table has not been written when the delay time expires, and write the uplink forwarding table after the writing of the downlink packaging table is completed based on the result of the determination. The delay time is not suggested to be set too long or too short, and should be subjected to appropriate adjustments, so as to protect the reliability of data transmission and at the same time ensure the timeliness of the response.

The time delaying module 40 is further arranged to: if the downlink packaging table has not been written, directly write the uplink forwarding table for a member corresponding to most approaching pre-configured time of writing the uplink forwarding table instead of postponing the writing of the uplink forwarding table, and take second most approaching pre-configured time of writing the uplink forwarding table as re-delayed time of writing the uplink forwarding table.

The time delaying module 40 of the routing load sharing apparatus conducts corresponding processing based on the result of the determination. The time delaying module 40 is further arranged to, if the downlink packaging table has not been written, directly write, for a member corresponding to most approaching pre-configured time of writing the uplink forwarding table, the uplink forwarding tables without the delay time, and take the second most approaching pre-configured time of writing an uplink forwarding table as re-delayed time of writing the uplink forwarding table, thus ensuring that the uplink forwarding table is written in a timely manner by means of the re-delayed time of writing the uplink forwarding table in the next routing load sharing.

The above is merely an exemplary embodiment of the present disclosure and not intended to limit the patent scope of the present disclosure, and any equivalent structure or flow transformation made by virtue of contents of the specification and drawings of the present disclosure or direct or indirect application of the contents to other related technical fields shall fall within the scope of protection as defined by appended claims of the present disclosure.

### Industrial Applicability

According to the above technical solution provided by the embodiments of the present disclosure, by means of pre-configuring time of writing the uplink forwarding table, the technical solution proposed by the embodiments of the present disclosure ensures that the writing of a downlink packaging table is prior to the writing of an uplink forwarding table. In this way, the problem of packet loss during forwarding caused by inconsistent uplink and downlink synchronization of distributed devices can be solved, thereby ensuring the reliability of network transmission.

## Claims

1. A method for synchronizing writing an uplink forwarding table and a downlink packaging table, comprising:
pre-configuring (S100) a time period to wait previous to determining whether to postpone the writing of an uplink forwarding table;
determining (S200) whether a downlink packaging table has been written when the pre-configured time period is elapsed; and
directly writing (S300) the uplink forwarding table if the downlink packaging table has been written;
wherein the uplink forwarding table and the downlink packaging table are located in one network node equipment.

2. The method for synchronizing writing an uplink forwarding table and a downlink packaging table as claimed in claim 1, wherein after determining (S200) whether the downlink packaging table has been written when the pre-configured time period is elapsed, the method further comprises:
setting (S400) delay time if the downlink packaging table has not been written, and writing the uplink forwarding table if the downlink packaging table has been written when the delay time expires.

3. The method for synchronizing writing an uplink forwarding table and a downlink packaging table as claimed in claim 1, wherein after determining (S200) whether the downlink packaging table has been written when the pre-configured time period is elapsed, the method further comprises:
resetting (S500) the delay time if the downlink packaging table has not been written when the delay time expires, and writing the uplink forwarding table after the writing of the downlink packaging table is completed.

4. The method for synchronizing writing an uplink forwarding table and a downlink packaging table as claimed in claim 1, wherein directly writing (S300) the uplink forwarding table if the downlink packaging table has been written comprises:
instead of postponing the writing of the uplink forwarding table, directly writing the uplink forwarding table for all members if the downlink packaging table has been written.

5. The method for synchronizing writing an uplink forwarding table and a downlink packaging table as claimed in any one of claims 1 to 4, wherein after determining (S200) whether the downlink packaging table has been written when the pre-configured time period is elapsed, the method further comprises:
if the downlink packaging table has not been written, postponing the writing of the uplink forwarding table for a member corresponding to most approaching pre-configured time period, and taking second most approaching pre-configured time period as reconfigured time period to wait previous to determining whether to postpone the writing the uplink forwarding table.

6. The method for synchronizing writing an uplink forwarding table and a downlink packaging table as claimed in any one of claims 1 to 4, wherein after determining (S200) whether the downlink packaging table has been written when the pre-configured time period is elapsed, the method further comprises:
if the downlink packaging table has not been written, instead of postponing the writing of the uplink forwarding table, directly writing the uplink forwarding table for a member corresponding to most approaching pre-configured time period, and taking second most approaching pre-configured time period as re-delayed time period to wait previous to determining whether to postpone the writing the uplink forwarding table.

7. The method for synchronizing writing an uplink forwarding table and a downlink packaging table as claimed in any one of claims 1 to 6, wherein determining (S200) whether the downlink packaging table has been written when the pre-configured time period is lapsed comprises:
when the pre-configured time period is elapsed, traversing all members one by one to determine whether each member has written the downlink packaging table so as to determine whether it is necessary to postpone the writing of the uplink forwarding table.

8. An apparatus for synchronizing writing an uplink forwarding table and a downlink packaging table, comprising:
a pre-configuring module (10) arranged to pre-configure time period to wait previous to determining whether to postpone the writing of an uplink forwarding table;
a determining module (20) arranged to determine whether a downlink packaging table has been written when the pre-configured time period is elapsed; and
an executing module (30) arranged to directly write the uplink forwarding table if the downlink packaging table has been written;
wherein the uplink forwarding table and the downlink packaging table are located in one network node equipment.

9. The apparatus for synchronizing writing an uplink forwarding table and a downlink packaging table as claimed in claim 8, wherein the routing load sharing apparatus further comprises:
a time delaying module (40) arranged to set delay time if the downlink packaging table has not been written, and write the uplink forwarding table if the downlink packaging table has been written when the delay time expires.

10. The apparatus for synchronizing writing an uplink forwarding table and a downlink packaging table as claimed in claim 8, wherein the time delaying module (40) is further arranged to reset the delay time if the downlink packaging table has not been written when the delay time expires, and write the uplink forwarding table after the writing of the downlink packaging table is completed.

11. The apparatus for synchronizing writing an uplink forwarding table and a downlink packaging table as claimed in claim 8, wherein the executing module (30) is arranged to, instead of postponing the writing of the uplink forwarding table, directly write the uplink forwarding table for all members if the downlink packaging table has been written.

12. The apparatus for synchronizing writing an uplink forwarding table and a downlink packaging table as claimed in any one of claims 8 to 11, wherein the time delaying module (40) is further arranged to: if the downlink packaging table has not been written, instead of postponing the writing of the uplink forwarding table, directly write the uplink forwarding table for a member corresponding to most approaching pre-configured time period, and take second most approaching pre-configured time period as re-delayed time period to wait previous to determining whether to postpone the writing of the uplink forwarding table.

13. The apparatus for synchronizing writing an uplink forwarding table and a downlink packaging table as claimed in any one of claims 8 to 11, wherein the time delaying module (40) is further arranged to: if the downlink packaging table has not been written, postpone the writing of the uplink forwarding table for a member corresponding to most approaching pre-configured time period, and take second most approaching pre-configured time period as reconfigured time period to wait previous to determining whether to postpone the writing of the uplink forwarding table.

14. The apparatus for synchronizing writing an uplink forwarding table and a downlink packaging table as claimed in any one of claims 8 to 13, wherein the determining module (20) is arranged to determine whether a downlink packaging table has been written when the pre-configured time period is elapsed in the following manner:
when the pre-configured time period is elapsed, traversing all members one by one to determine whether each member has written the downlink packaging table so as to determine whether it is necessary to postpone the writing of the uplink forwarding table.

## Patentansprüche

1. Verfahren zum Synchronisieren des Schreibens einer Uplink-Weiterleitungstabelle und einer Downlink-Packtabelle, umfassend:
Vorkonfigurieren (S100) eines Wartezeitraums vor dem Ermitteln, ob das Schreiben einer Uplink-Weiterleitungstabelle verschoben werden muss;
Ermitteln (S200), ob eine Downlink-Packtabelle geschrieben wurde, wenn der vorkonfigurierte Zeitraum abgelaufen ist; und
direktes Schreiben (S300) der Uplink-Weiterleitungstabelle, falls die Downlink-Packtabelle geschrieben wurde;
wobei sich die Uplink-Weiterleitungstabelle und die Downlink-Packtabelle in einem Netzwerkknotengerät befinden.

2. Verfahren zum Synchronisieren des Schreibens einer Uplink-Weiterleitungstabelle und einer Downlink-Packtabelle nach Anspruch 1, wobei nach dem Ermitteln (S200), ob die Downlink-Packtabelle geschrieben wurde, wenn der vorkonfigurierte Zeitraum abgelaufen ist, das Verfahren ferner umfasst:
Festlegen (S400) der Verzögerungszeit, falls die Downlink-Packtabelle nicht geschrieben wurde, und Schreiben der Uplink-Weiterleitungstabelle, falls die Downlink-Packtabelle nach Ablauf der Verzögerungszeit geschrieben wurde.

3. Verfahren zum Synchronisieren des Schreibens einer Uplink-Weiterleitungstabelle und einer Downlink-Packtabelle nach Anspruch 1, wobei nach dem Ermitteln (S200), ob die Downlink-Packtabelle geschrieben wurde, wenn der vorkonfigurierte Zeitraum abgelaufen ist, das Verfahren ferner umfasst:
Zurücksetzen (S500) der Verzögerungszeit, falls die Downlink-Packtabelle nach Ablauf der Verzögerungszeit nicht geschrieben wurde, und Schreiben der Uplink-Weiterleitungstabelle nach Abschluss des Schreibens der Downlink-Packtabelle.

4. Verfahren zum Synchronisieren des Schreibens einer Uplink-Weiterleitungstabelle und einer Downlink-Packtabelle nach Anspruch 1, wobei, falls die Downlink-Packtabelle geschrieben wurde, das direkte Schreiben (S300) der Uplink-Weiterleitungstabelle umfasst:
anstelle des Verschiebens des Schreibens der Uplink-Weiterleitungstabelle direktes Schreiben der Uplink-Weiterleitungstabelle für alle Mitglieder, falls die Downlink-Packtabelle geschrieben wurde.

5. Verfahren zum Synchronisieren des Schreibens einer Uplink-Weiterleitungstabelle und einer Downlink-Packtabelle nach einem der Ansprüche 1 bis 4, wobei nach dem Ermitteln (S200), ob die Downlink-Packtabelle geschrieben wurde, wenn der vorkonfigurierte Zeitraum abgelaufen ist, das Verfahren ferner umfasst:
falls die Downlink-Packtabelle nicht geschrieben wurde, Verschieben des Schreibens der Uplink-Weiterleitungstabelle für ein Mitglied, das dem nächstgelegenen vorkonfigurierten Zeitraum entspricht, und Übernehmen des zweitnächsten vorkonfigurierten Zeitraums als neukonfigurierten Zeitraum, der vor dem Ermitteln zu warten ist, ob das Schreiben der Uplink-Weiterleitungstabelle verschoben werden muss.

6. Verfahren zum Synchronisieren des Schreibens einer Uplink-Weiterleitungstabelle und einer Downlink-Packtabelle nach einem der Ansprüche 1 bis 4, wobei nach dem Ermitteln (S200), ob die Downlink-Packtabelle geschrieben wurde, wenn der vorkonfigurierte Zeitraum abgelaufen ist, das Verfahren ferner umfasst:
falls die Downlink-Packtabelle nicht geschrieben wurde, anstelle des Verschiebens des Schreibens der Uplink-Weiterleitungstabelle direktes Schreiben der Uplink-Weiterleitungstabelle für ein Mitglied, das dem nächstgelegenen vorkonfigurierten Zeitraum entspricht, und Übernehmen des zweitnächsten vorkonfigurierten Zeitraums als erneut verzögerten Zeitraum, der vor dem Ermitteln zu warten ist, ob das Schreiben der Uplink-Weiterleitungstabelle verschoben werden muss.

7. Verfahren zum Synchronisieren des Schreibens einer Uplink-Weiterleitungstabelle und einer Downlink-Packtabelle, nach einem der Ansprüche 1 bis 6, wobei das Ermitteln (S200), ob die Downlink-Packtabelle geschrieben wurde, wenn der vorkonfigurierte Zeitraum abgelaufen ist, umfasst:
wenn der vorkonfigurierte Zeitraum abgelaufen ist, Durchlaufen aller Mitglieder nacheinander, um zu ermitteln, ob jedes Mitglied die Downlink-Packtabelle geschrieben hat, um zu ermitteln, ob das Schreiben der Uplink-Weiterleitungstabelle verschoben werden muss.

8. Vorrichtung zum Synchronisieren des Schreibens einer Uplink-Weiterleitungstabelle und einer Downlink-Packtabelle, umfassend:
ein Vorkonfigurationsmodul (10), das angeordnet ist, um den Zeitraum vorzukonfigurieren, der zu warten ist, bevor ermittelt wird, ob das Schreiben einer Uplink-Weiterleitungstabelle verschoben werden muss;
ein Ermittlungsmodul (20), das angeordnet ist, um zu ermitteln, ob eine Downlink-Packtabelle geschrieben wurde, wenn der vorkonfigurierte Zeitraum abgelaufen ist; und
ein Ausführungsmodul (30), das angeordnet ist, um die Uplink-Weiterleitungstabelle direkt zu schreiben, falls die Downlink-Packtabelle geschrieben wurde;
wobei sich die Uplink-Weiterleitungstabelle und die Downlink-Packtabelle in einem Netzwerkknotengerät befinden.

9. Vorrichtung zum Synchronisieren des Schreibens einer Uplink-Weiterleitungstabelle und einer Downlink-Packtabelle nach Anspruch 8, wobei die Routing-Lastteilungsvorrichtung ferner umfasst:
ein Zeitverzögerungsmodul (40), das angeordnet ist, um die Verzögerungszeit festzulegen, falls die Downlink-Packtabelle nicht geschrieben wurde, und die Uplink-Weiterleitungstabelle zu schreiben, falls die Downlink-Packtabelle geschrieben wurde, wenn die Verzögerungszeit abläuft.

10. Vorrichtung zum Synchronisieren des Schreibens einer Uplink-Weiterleitungstabelle und einer Downlink-Packtabelle nach Anspruch 8, wobei das Zeitverzögerungsmodul (40) ferner angeordnet ist, um die Verzögerungszeit zurückzusetzen, falls die Downlink-Packtabelle nicht geschrieben wurde, wenn die Verzögerungszeit abläuft, und die Uplink-Weiterleitungstabelle zu schreiben, nachdem das Schreiben der Downlink-Packtabelle abgeschlossen ist.

11. Vorrichtung zum Synchronisieren des Schreibens einer Uplink-Weiterleitungstabelle und einer Downlink-Packtabelle nach Anspruch 8, wobei das Ausführungsmodul (30) angeordnet ist, um anstelle des Verschiebens des Schreibens der Uplink-Weiterleitungstabelle die Uplink-Weiterleitungstabelle für alle Mitglieder direkt zu schreiben, falls die Downlink-Packtabelle geschrieben wurde.

12. Vorrichtung zum Synchronisieren des Schreibens einer Uplink-Weiterleitungstabelle und einer Downlink-Packtabelle nach einem der Ansprüche 8 bis 11, wobei das Zeitverzögerungsmodul (40) ferner angeordnet ist, um: falls die Downlink-Packtabelle nicht geschrieben wurde, anstelle des Verschiebens des Schreibens der Uplink-Weiterleitungstabelle die Uplink-Weiterleitungstabelle für ein Mitglied direkt zu schreiben, das dem nächstgelegenen vorkonfigurierten Zeitraum entspricht, und den zweitnächsten vorkonfigurierten Zeitraum als erneut verzögerten Zeitraum zu übernehmen, der vor dem Ermitteln zu warten ist, ob das Schreiben der Uplink-Weiterleitungstabelle verschoben werden muss.

13. Vorrichtung zum Synchronisieren des Schreibens einer Uplink-Weiterleitungstabelle und einer Downlink-Packtabelle nach einem der Ansprüche 8 bis 11, wobei das Zeitverzögerungsmodul (40) ferner angeordnet ist, um: falls die Downlink-Packtabelle nicht geschrieben wurde, das Schreiben der Uplink-Weiterleitungstabelle für ein Mitglied zu verschieben, das dem nächstgelegenen vorkonfigurierten Zeitraum entspricht, und den zweitnächsten vorkonfigurierten Zeitraum als neukonfigurierten Zeitraum zu übernehmen, der vor dem Ermitteln zu warten ist, ob das Schreiben der Uplink-Weiterleitungstabelle verschoben werden muss.

14. Vorrichtung zum Synchronisieren des Schreibens einer Uplink-Weiterleitungstabelle und einer Downlink-Packtabelle, nach einem der Ansprüche 8 bis 13, wobei das Ermittlungsmodul (20) angeordnet ist, um zu ermitteln, ob eine Downlink-Packtabelle geschrieben wurde, wenn der vorkonfigurierte Zeitraum wie folgt abgelaufen ist:
wenn der vorkonfigurierte Zeitraum abgelaufen ist, Durchlaufen aller Mitglieder nacheinander, um zu ermitteln, ob jedes Mitglied die Downlink-Packtabelle geschrieben hat, um zu ermitteln, ob das Schreiben der Uplink-Weiterleitungstabelle verschoben werden muss.

## Revendications

1. Procédé pour synchroniser l'écriture d'une table de transfert en liaison montante et d'une table de conditionnement en liaison descendante, comprenant :
la préconfiguration (S100) d'une période à attendre avant de déterminer s'il faut reporter l'écriture d'une table de transfert en liaison montante ;
la détermination (S200) pour savoir si une table de conditionnement en liaison descendante a été écrite lorsque la période préconfigurée est écoulée ; et
l'écriture directe (S300) de la table de transfert en liaison montante si la table de conditionnement en liaison descendante a été écrite ;
dans lequel la table de transfert en liaison montante et la table de conditionnement en liaison descendante sont situées dans un équipement de nœud de réseau.

2. Procédé pour synchroniser l'écriture d'une table de transfert en liaison montante et d'une table de conditionnement en liaison descendante selon la revendication 1, dans lequel, après avoir déterminé (S200) si la table de conditionnement en liaison descendante a été écrite lorsque la période préconfigurée est écoulée, le procédé comprend en outre :
le réglage (S400) d'un temps de retard si la table de conditionnement en liaison descendante n'a pas été écrite et l'écriture de la table de transfert en liaison montante si la table de conditionnement en liaison descendante a été écrite lorsque le temps de retard expire.

3. Procédé pour synchroniser l'écriture d'une table de transfert en liaison montante et d'une table de conditionnement en liaison descendante selon la revendication 1, dans lequel, après avoir déterminé (S200) si la table de conditionnement en liaison descendante a été écrite lorsque la période préconfigurée est écoulée, le procédé comprend en outre :
la réinitialisation (S500) du temps de retard si la table de conditionnement en liaison descendante n'a pas été écrite lorsque le temps de retard expire et l'écriture de la table de transfert en liaison montante après que l'écriture de la table de conditionnement en liaison descendante est terminée.

4. Procédé pour synchroniser l'écriture d'une table de transfert en liaison montante et d'une table de conditionnement en liaison descendante selon la revendication 1, dans lequel l'écriture directe (S300) de la table de transfert en liaison montante, si la table de conditionnement en liaison descendante a été écrite, comprend :
au lieu de reporter l'écriture de la table de transfert en liaison montante, l'écriture directe de la table de transfert en liaison montante pour tous les membres si la table de conditionnement en liaison descendante a été écrite.

5. Procédé pour synchroniser l'écriture d'une table de transfert en liaison montante et d'une table de conditionnement en liaison descendante selon l'une quelconque des revendications 1 à 4, dans lequel, après avoir déterminé (S200) si la table de conditionnement en liaison descendante a été écrite lorsque la période préconfigurée est écoulée, le procédé comprend en outre :
si la table de conditionnement en liaison descendante n'a pas été écrite, le report de l'écriture de la table de transfert en liaison montante pour un membre correspondant à la période préconfigurée la plus proche et la considération de la seconde période préconfigurée la plus proche comme période reconfigurée à attendre avant de déterminer s'il faut reporter l'écriture de la table de transfert en liaison montante.

6. Procédé pour synchroniser l'écriture d'une table de transfert en liaison montante et d'une table de conditionnement en liaison descendante selon l'une quelconque des revendications 1 à 4, dans lequel, après avoir déterminé (S200) si la table de conditionnement en liaison descendante a été écrite lorsque la période préconfigurée est écoulée, le procédé comprend en outre :
si la table de conditionnement en liaison descendante n'a pas été écrite, au lieu de reporter l'écriture de la table de transfert en liaison montante, l'écriture directe de la table de transfert en liaison montante pour un membre correspondant à la période préconfigurée la plus proche et la considération de la seconde période préconfigurée la plus proche comme période à nouveau retardée à attendre avant de déterminer s'il faut reporter l'écriture de la table de transfert en liaison montante.

7. Procédé pour synchroniser l'écriture d'une table de transfert en liaison montante et d'une table de conditionnement en liaison descendante selon l'une quelconque des revendications 1 à 6, dans lequel la détermination (S200) pour savoir si la table de conditionnement en liaison descendante a été écrite lorsque la période préconfigurée est écoulée, comprend :
lorsque la période préconfigurée est écoulée, la traversée de tous les membres, un par un, pour déterminer si chaque membre a écrit la table de conditionnement en liaison descendante afin de déterminer s'il est nécessaire de reporter l'écriture de la table de transfert en liaison montante.

8. Appareil pour synchroniser l'écriture d'une table de transfert en liaison montante et d'une table de conditionnement en liaison descendante, comprenant :
un module de préconfiguration (10) agencé pour préconfigurer une période à attendre avant de déterminer s'il faut reporter l'écriture d'une table de transfert en liaison montante ;
un module de détermination (20) agencé pour déterminer si une table de conditionnement en liaison descendante a été écrite lorsque la période préconfigurée est écoulée ; et
un module d'exécution (30) agencé pour écrire directement la table de transfert en liaison montante si la table de conditionnement en liaison descendante a été écrite ;
dans lequel la table de transfert en liaison montante et la table de conditionnement en liaison descendante sont situées dans un équipement de nœud de réseau.

9. Appareil pour synchroniser l'écriture d'une table de transfert en liaison montante et d'une table de conditionnement en liaison descendante selon la revendication 8, dans lequel l'appareil de partage de charge de routage comprend en outre :
un module de retardement (40) agencé pour régler un temps de retard si la table de conditionnement en liaison descendante n'a pas été écrite et écrire la table de transfert en liaison montante si la table de conditionnement en liaison descendante a été écrite lorsque le temps de retard expire.

10. Appareil pour synchroniser l'écriture d'une table de transfert en liaison montante et d'une table de conditionnement en liaison descendante selon la revendication 8, dans lequel le module de retardement (40) est en outre agencé pour réinitialiser le temps de retard si la table de conditionnement en liaison descendante n'a pas été écrite lorsque le temps de retard expire et écrire la table de transfert en liaison montante après que l'écriture de la table de conditionnement en liaison descendante est terminée.

11. Appareil pour synchroniser l'écriture d'une table de transfert en liaison montante et d'une table de conditionnement en liaison descendante selon la revendication 8, dans lequel le module d'exécution (30) est agencé pour, au lieu de reporter l'écriture de la table de transfert en liaison montante, écrire directement la table de transfert en liaison montante pour tous les membres si la table de conditionnement en liaison descendante a été écrite.

12. Appareil pour synchroniser l'écriture d'une table de transfert en liaison montante et d'une table de conditionnement en liaison descendante selon l'une quelconque des revendications 8 à 11, dans lequel le module de retardement (40) est en outre agencé pour : si la table de conditionnement en liaison descendante n'a pas été écrite, au lieu de reporter l'écriture de la table de transfert en liaison montante, écrire directement la table de transfert en liaison montante pour un membre correspondant à la période préconfigurée la plus proche et considérer la seconde période préconfigurée la plus proche comme période de nouveau retardée à attendre avant de déterminer s'il faut reporter l'écriture de la table de transfert en liaison montante.

13. Appareil pour synchroniser l'écriture d'une table de transfert en liaison montante et d'une table de conditionnement en liaison descendante selon l'une quelconque des revendications 8 à 11, dans lequel le module de retardement (40) est en outre agencé pour : si la table de conditionnement en liaison descendante n'a pas été écrite, reporter l'écriture de la table de transfert en liaison montante pour un membre correspondant à la période préconfigurée la plus proche et considérer la seconde période préconfigurée la plus proche comme période reconfigurée à attendre avant de déterminer s'il faut reporter l'écriture de la table de transfert en liaison montante.

14. Appareil pour synchroniser l'écriture d'une table de transfert en liaison montante et d'une table de conditionnement en liaison descendante selon l'une quelconque des revendications 8 à 13, dans lequel le module de détermination (20) est agencé pour déterminer si une table de conditionnement en liaison descendante a été écrite lorsque la période préconfigurée s'est écoulée de la manière suivante :
lorsque la période préconfigurée est écoulée, la traversée de tous les membres, un par un, pour déterminer si chaque membre a écrit la table de conditionnement en liaison descendante afin de déterminer s'il est nécessaire de reporter l'écriture de la table de transfert en liaison montante.
